# EUROPÄISCHE PATENTSCHRIFT

(11) **EP 3 476 534 B1**
(45) Veröffentlichungstag und Bekanntmachung des Hinweises auf die Patenterteilung: **21.07.2021**
(21) Anmeldenummer: 18201739.2
(22) Anmeldetag: 22.10.2018
(51) Int. Cl.: B23Q 11/00

(54) **BEARBEITUNGSVORRICHTUNG ZUM BEARBEITEN VON WERKSTÜCKEN UND VERFAHREN ZUM WEGFÜHREN VON SPÄNEN VOM WERKZEUG**
MACHINING DEVICE FOR MACHINING WORKPIECES AND METHOD FOR REMOVING CHIPS FROM THE MOULD
DISPOSITIF D'USINAGE DESTINÉ À USINER DES PIÈCES ET PROCÉDÉ D'ÉLIMINATION DES COPEAUX DE L'OUTIL

(30) Priorität: 23.10.2017 DE 102017124658
(43) Veröffentlichungstag der Anmeldung: 01.05.2019
(73) Patentinhaber: HOMAG GmbH, 72296 Schopfloch (DE)
(72) Erfinder: Schlotter, Rainer, 72160 Horb (DE)
(74) Vertreter: Hoffmann Eitle

(56) Entgegenhaltungen:
- WO-A1-93/14904
- WO-A1-2005/002795
- DE-A1- 3 611 747
- GB-A- 2 070 493
- US-B1- 6 289 956

## Beschreibung

### Technisches Gebiet

Die Erfindung betrifft Bündigfräsaggregate oder Ziehklingenaggregate zum Bearbeiten von plattenförmigen Werkstücken, die zumindest teilweise aus Holz, Holzwerkstoffen oder Kunststoff oder dergleichen bestehen, insbesondere nach dem Oberbegriff von Anspruch 1.

### Stand der Technik

Bearbeitungsvorrichtungen der eingangs genannten Art finden bei der Bearbeitung und Nachbearbeitung von Werkstücken breite Anwendung. Dabei kann ein Span oder können mehrere Späne entstehen, der/die entfernt werden soll (en), damit der Span bzw. die Späne im Laufe der weiteren Bearbeitung das Werkstück bzw. bei der Bearbeitung weiterer Werkstücke nicht stört.

Beispielsweise kann der Span bzw. können die Späne die Bearbeitungseinrichtung verschmutzen und dadurch stören. Die Späne können sich auch auf Bereiche des Werkstücks ablegen und anhaften, was gleichermaßen zu Störungen und Fehlbearbeitung führen kann. Bei längeren Spänen, die beispielsweise im Wesentlichen der Kantenlänge entsprechen, kann der Span am Bearbeitungsaggregat hängen bleiben und so zu einer Störung führen. Insbesondere bei kleinen Spänen kommt es zu einer unkontrollierten Abgabe der Späne, die verschiedenen Bauteile beeinträchtigen können.

Beispielsweise ist aus der DE 10 2015 204 326 A1 ein Aggregat bekannt, das einen Span dadurch zu einer Absaughaube transportiert, dass eine Abschirmung den Span wegleitet.

Ferner geht aus WO 2005/002 795 A eine Vorrichtung zum Sammeln und Entfernen von Partikeln, die aus einem Winkelschleifer ausgestoßen werden, hervor.

Derartige Vorrichtungen haben sich bewährt. Allerdings werden immer höhere Anforderungen an deren Zuverlässigkeit gestellt.

Die WO 93/14904 A1 betrifft eine Schleifmaschine mit Absaugung von Staub. Folglich offenbart diese Veröffentlichung kein Bündigfräsaggregat oder Ziehklingenaggregat sowie keine Handhabung von Spänen. Überdies offenbart die Veröffentlichung auch keine Fluidzuführung und Wegführung im Sinne des Anspruchs 1, die derart ausgestaltet sind, dass sie im Verbindungsbereich eine Ringdüse ausbilden.

### Darstellung der Erfindung

Es ist daher Aufgabe der vorliegenden Erfindung, bei einfacher Konstruktion die Zuverlässigkeit eines Bündigfräsaggregats oder Ziehklingenaggregats bzw. einer Bearbeitung von Werkstücken zu verbessern. Bevorzugt soll eine platzsparende Lösung vorgesehen werden. Insbesondere soll die Wegführung eines Spans bzw. von Spänen verbessert werden.

Diese Aufgabe wird erfindungsgemäß durch das Bündigfräsaggregat oder Ziehklingenaggregat mit den Merkmalen von Anspruch 1 gelöst. Demzufolge weist ein Bündigfräsaggregat oder Ziehklingenaggregat zum Bearbeiten von plattenförmigen Werkstücken, die zumindest teilweise aus Holz, Holzwerkstoffen, Kunststoff oder dergleichen bestehen, Folgendes auf: eine Bearbeitungseinrichtung zum Bearbeiten des Werkstücks (bevorzugt eine Nachbearbeitungseinrichtung zum Nachbearbeiten des Werkstücks) unter Abgabe eines Spans oder von Spänen, eine Wegführung zum Wegführen von zumindest einem Teil des Spans oder von Spänen, und eine Fluidzuführung zum Zuführen von Fluid, insbesondere von Druckluft. Die Fluidzuführung steht mit der Wegführung in einem Verbindungsbereich in Fluidverbindung. Die Fluidzuführung und die Wegführung sind ferner derart ausgebildet bzw. angeordnet, dass eine Zufuhr von Fluid in den Verbindungsbereich mittels der Fluidzuführung einen Unterdruck in einem dem Verbindungsbereich benachbarten Bereich erzeugt, der nahe dem Werkstück und/oder der Bearbeitungseinrichtung liegt, sodass eine Strömung, die zumindest einen Teil des Spans oder der Späne transportiert, von dem Werkstück und/oder der Bearbeitungseinrichtung zu dem benachbarten Bereich hin entsteht. Die Fluidzuführung und die Wegführung sind derart ausgestaltet, dass sie im Verbindungsbereich eine Ringdüse ausbilden. Bei einer derartigen Anordnung der Fluidzuführung und der Wegführung relativ zueinander kann erreicht werden, dass die Zufuhr des Fluids mit hohem Druck und gleichzeitig bei hoher Strömungsgeschwindigkeit des zugeführten Fluids erfolgt. Dadurch kann die Erzeugung der induzierten Strömung bzw. des Unterdrucks verbessert werden.

Des Weiteren ist das erfindungsgemäße Verfahren von Anspruch 12 vorgesehen. Demzufolge wird zumindest ein Teil eines Spans oder von Spänen von dem Werkstück weggeführt, wobei das Werkstück bearbeitet (bevorzugt nachbearbeitet) wird, und dabei der Span oder die Späne entstehen. Fluid wird derart zugeführt, dass ein Unterdruck nahe dem Werkstück und/oder der Bearbeitungseinrichtung entsteht und dadurch (also mittels des Unterdrucks) eine Strömung erzeugt wird, die den Span bzw. die Späne weg von dem Werkstück und/oder der Bearbeitungseinrichtung transportiert.

Dadurch kann ein Unterdruck indirekt erzeugt werden, indem Fluid in einen Verbindungsbereich eingeführt wird und dabei Luft mitreißt, die dann in dem benachbarten Bereich "fehlt". In diesem Bereich wird dadurch ein Unterdruck ausgebildet, der wiederum durch Luft ausgeglichen wird, die sich in der Umgebung des Werkstücks und/oder der Bearbeitungseinrichtung befindet. Als Ausgleich wird also Umgebungsluft des Werkstücks und/oder der Bearbeitungseinrichtung in diesen benachbarten Bereich durch den Unterdruck "angsaugt". Da sich in der Umgebung des Werkstücks und/oder der Bearbeitungseinrichtung der Span bzw. die Späne befinden, können dadurch der Span bzw. die Späne effizient weggeführt werden.

Mit anderen Worten wird also ein Unterdruck nicht direkt erzeugt, indem beispielsweise eine Pumpe eingesetzt wird, die Luft ansaugt, sondern der Unterdruck wird indirekt erzeugt, indem Fluid zugeführt wird, das den Unterdruck "induziert". Dies hat den Vorteil gegenüber einer direkten Ansaugung der Späne an einer ähnlichen Stelle, dass die Zufuhr von Fluid technisch besser umsetzbar ist als das Erzeugen von Unterdruck. Die Erzeugung von Unterdruck ist technisch aufwändiger. Dadurch ist erfindungsgemäß der benötigte Bauraum klein, und es können alle Bauteile kompakt angeordnet werden.

Der Erfindung liegt der Gedanke zugrunde, Fluid in einen Verbindungsbereich (bevorzugt in und/oder an der Wegführung) zuzuführen, sodass indirekt eine Strömung weg von dem Werkstück entsteht. Dadurch, dass Fluid in den Verbindungsbereich zugeführt wird, wird Umgebungsluft in der Nähe des Verbindungsbereichs (nämlich im benachbarten Bereich) mitgerissen, sodass Fluid, das sich im Wesentlichen um das Werkstück und/oder die Bearbeitungseinrichtung herum befindet, durch diesen Unterdruck angesaugt wird. Dabei werden der Span oder die Späne, die sich in der Umgebung(sluft) des Werkstücks befinden, mitgerissen. Dadurch erfolgt die Wegführung des Spans bzw. der Späne direkt am Entstehungsort, nämlich am Werkstück bzw. der Bearbeitungseinrichtung.

Somit kann der Span bzw. können die Späne also durch diese zusätzliche Strömung, die durch die Zufuhr von Fluid induziert wurde, zuverlässiger abtransportiert werden. Mit anderen Worten wird der Span bzw. werden die Späne besser von dem Werkstück weggeleitet, da die Bewegung des Spans bzw. der Späne im Wesentlichen durch die Bewegung der Luftmassen vorgegeben ist, in der sich der Span bzw. die Späne bewegen. Somit kann der Span bzw. können die Späne mit hoher Geschwindigkeit bzw. hoher Bewegungsenergie gezielt vom Werkstück bzw. der Bearbeitungseinrichtung weggefördert werden.

Die Ausbildung des Verbindungsbereichs und die Anordnung der Fluidzuführung und der Wegführung wirken also wie ein Trichter mit Luftverstärker, der den Span bzw. die Späne ein- oder ansaugt und wegbefördert.

Dadurch, dass das zugeführte Fluid eine Strömungsrichtung aufweist, wenn das Fluid in den Verbindungsbereich eingebracht wird, wird dadurch gleichzeitig die Strömungsrichtung vorgegeben, die sich für die induzierte Strömung ergibt, also die Strömung, die durch den Ausgleich des Unterdrucks entsteht. Die Strömungsrichtung des Fluids, das durch die Fluidzuführung zugeführt wird, entspricht der Strömungsrichtung, in der der Span bzw. die Späne vom Werkstück weggeführt werden. Dabei ist aber zu berücksichtigen, dass natürlich Richtungsänderungen durch eine spezielle Führung vorliegen können. Der benachbarte Bereich, in dem der Unterdruck entsteht, kann dem Verbindungsbereich vorgelagert sein, in Bezug auf die Strömungsrichtung bzw. den Strömungsverlauf.

Die erfindungsgemäße Strömung, die durch die Fluidzufuhr mittels der Fluidzuführung induziert wird, kann zusätzlich zu einer anderen Strömung vorliegen, die beispielsweise zum Ansaugen in die Abzugshaube dient.

Die Bearbeitungsvorrichtung ist ein Aggregat, nämlich ein Bündigfräsaggregat oder ein Ziehklingenaggregat. Unter einer Bearbeitungseinrichtung ist insbesondere eine Bearbeitungseinrichtung zur spanenden Bearbeitung zu verstehen. Dabei kann es sich bevorzugt um einen Fräser handeln. Eine Nachbearbeitungseinrichtung als Bearbeitungseinrichtung kann beispielsweise eine Ziehklinge sein, mit der Oberflächenmaterial des Werkstücks oder einer auf dem Werkstück aufgebrachten Kante abgezogen wird.

Die Wegführung kann in sich geschlossen sein oder geöffnet sein. Beispielsweise kann sie rohrförmig ausgebildet sein, oder sie kann als Ablenkblech ausgebildet sein.

Die Fluidzuführung dient zum Zuführen von Fluid. Das Fluid ist bevorzugt Druckluft.

Dass die Fluidzuführung mit der Wegführung in dem Verbindungsbereich in Fluidverbindung steht, ist so zu verstehen, dass Fluid in und/oder an die Wegführung durch die Fluidzuführung geführt werden kann, wobei dies in dem Verbindungsbereich stattfindet.

Die Wegführung kann den Span oder die Späne zu einer Abzugshaube hinleiten oder zumindest in eine bestimmte, gewünschte Richtung leiten. Die Wegführung muss den Span oder die Späne nicht unmittelbar abführen, sondern kann als Führung zu einer Abführung ausgebildet sein. Die Wegführung kann zusätzlich zu einer Absaughaube vorgesehen sein.

Die Werkstücke, die bearbeitet bzw. nachbearbeitet werden, sind plattenförmige Werkstücke, die zumindest teilweise aus Holz, Holzwerkstoffen oder Kunststoff bestehen. Die Werkstücke werden insbesondere zur Möbelherstellung verwendet.

Bevorzugte Ausführungsformen sind in den abhängigen Ansprüchen definiert.

Bevorzugt können die Fluidzuführung und die Wegführung derart relativ zueinander angeordnet sein, dass Zuführen von Fluid in den Verbindungsbereich einen Unterdruck in einem Bereich erzeugt, der zwischen dem Werkstück und dem Verbindungsbereich liegt.

Insbesondere kann der Verbindungsbereich näher als der benachbarte Bereich an dem Ende der Wegführung liegen, zu dem hin der Span oder die Späne abgeführt werden. Bevorzugt kann eine Strömung weg von dem Werkstück durch eine Fluidzufuhr erzeugt werden, die auf der gleichen Seite des Werkstücks zugeführt wird, zu der der Span bzw. die Späne hin weggeführt werden sollen. Der Verbindungsbereich ist dann dem benachbarten Bereich nachgelagert, sodass die im benachbarten Bereich induzierte Strömung in die gleiche Richtung strömt, in die Fluid in den Verbindungsbereich zugeführt wurde. Vorzugsweise ist die Wegführung zumindest im Verbindungsbereich rohrförmig ausgebildet. Bei einer rohrförmigen Ausbildung kann der Span bzw. können die Späne besonders gut definiert geleitet und weggeführt werden.

Vorzugsweise sind die Wegführung und die Fluidzuführung zumindest im Verbindungsbereich zumindest abschnittsweise konzentrisch zueinander angeordnet und/oder die Fluidzuführung ist ringförmig ausgebildet. Bevorzugt umgibt der zweite Abschnitt den ersten Abschnitt zumindest im Verbindungsbereich ringförmig. Dadurch kann eine gleichmäßige und ausreichend hohe Strömung in dem benachbarten Bereich induziert werden. Die Fluidzuführung kann aber auch anders ausgebildet sein. Beispielsweise kann sie seitlich angeordnet sein. Sie kann dann seitlich an einer Öffnung sein. Die Fluidzuführung kann punktförmig ausgebildet sein.

Vorzugsweise weist die Wegführung einen ersten Abschnitt und einen zweiten Abschnitt auf, wobei der zweite Abschnitt näher als der erste Abschnitt an dem Ende der Wegführung liegt, zu dem hin der Span oder die Späne abgeführt werden.

Der erste und zweite Abschnitt bilden dann im Verbindungsbereich die Fluidzuführung aus. Mit anderen Worten sind der erste und zweite Abschnitt der Wegführung dann derart zueinander angeordnet, dass sie eine Ringdüse ausbilden.

Der zweite Abschnitt kann zumindest abschnittsweise aus dem Bündigfräsaggregat oder dem Ziehklingenaggregat vorstehen. Da der zweite Abschnitt an dem Ende angeordnet ist, zu dem hin der Span oder die Späne abgeführt werden, werden der Span bzw. die Späne dann mit einem gewissen Abstand zu dem Bündigfräsaggregat oder dem Ziehklingenaggregat ausgegeben. Dadurch kann eine Behinderung bei der Bearbeitung vermieden werden. Im Übrigen besteht dadurch, dass der zweite Abschnitt aus dem Bündigfräsaggregat oder dem Ziehklingenaggregat vorsteht, eine erhöhte Flexibilität dahingehend, wie der zweite Abschnitt ausgestaltet ist. Beispielsweise kann der zweite Abschnitt als vorstehendes Rohr ausgebildet sein. Der zweite Abschnitt kann dadurch so ausgebildet sein, dass der Span bzw. die Späne in eine gewünschte Richtung geleitet werden. Es ist denkbar, dass der zweite Abschnitt verstellbar angeordnet ist, sodass die Richtung, in die die Späne weggeführt werden, veränderbar ist.

In einer bevorzugten Ausführungsform ist das Bündigfräsaggregat oder das Ziehklingenaggregat derart ausgestaltet, dass die Wegführung zumindest abschnittsweise innerhalb des Bündigfräsaggregats oder des Ziehklingenaggregats verläuft und/oder zumindest der erste Abschnitt innerhalb der Bearbeitungsrichtung verläuft. Dadurch, dass zumindest ein Teil der Wegführung innerhalb des Bündigfräsaggregats oder des Ziehklingenaggregats angeordnet ist, kann Platz gespart werden. Beispielsweise ist es nicht notwendig, zusätzliche Vorrichtungen (wie außen verlaufende Schläuche) vorzusehen, durch die die Späne abgeführt werden.

Der erste Abschnitt kann eine Öffnung aufweisen, die benachbart zur Bearbeitungseinrichtung und/oder dem Werkstück ausgebildet ist. Dadurch, dass der erste Abschnitt zumindest abschnittsweise innerhalb des Bündigfräsaggregats oder des Ziehklingenaggregats verläuft und eine Öffnung aufweist, die sich benachbart zur Bearbeitungseinrichtung und/oder dem Werkstück öffnet, kann durch die Wegführung gezielt Umgebungsluft weggeführt werden, die das Werkstück umgibt. Der Span bzw. die Späne können dann während der Bearbeitung am Entstehungsort in das Bündigfräsaggregat oder das Ziehklingenaggregat hinein weggeführt werden. Dies trägt dazu bei, dass der Span bzw. die Späne abgeführt werden, bevor sie die weitere Bearbeitung behindern können.

Das Bündigfräsaggregat oder das Ziehklingenaggregat kann einen Anschluss zum Anschließen einer Fluidzuleitung und zum Einleiten von Fluid in die Fluidzuführung aufweisen. An den Anschluss kann beispielsweise eine Druckluftquelle angeschlossen werden, mittels der Fluid eingebracht und zugeleitet wird.

Die Fluidzuführung kann zumindest abschnittsweise innerhalb des Bündigfräsaggregats oder des Ziehklingenaggregats ausgebildet sein. Demzufolge kann ein Großteil der Fluidzuführung innerhalb des Bündigfräsaggregats oder des Ziehklingenaggregats verlaufen, sodass keine zusätzlichen Bauteile an das Bündigfräsaggregat oder das Ziehklingenaggregat angebracht werden müssen. Dies trägt zur Platzersparnis bei.

Weitere Merkmale und Vorteile der Erfindung werden anhand der nachfolgenden ausführlichen Beschreibung noch näher ersichtlich werden.

### Kurze Beschreibung der Zeichnungen

- Figur 1: zeigt eine Bearbeitungsvorrichtung als erste Ausführungsform der vorliegenden Erfindung;
- Figur 2: zeigt eine andere Ansicht gemäß der ersten Ausführungsform;
- Figur 3: zeigt eine Schnittansicht gemäß der ersten Ausführungsform der vorliegenden Erfindung;
- Figur 4: zeigt eine Nachbearbeitungsvorrichtung gemäß der zweiten Ausführungsform der vorliegenden Erfindung;
- Figur 5: zeigt eine Schnittansicht gemäß der zweiten Ausführungsform.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

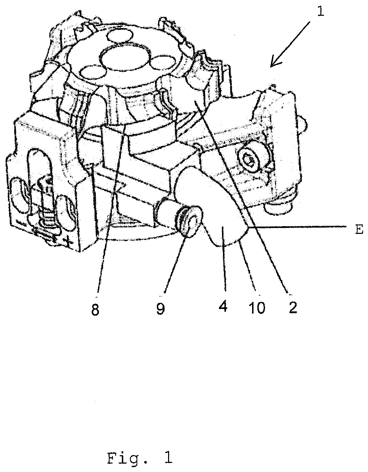

Figur 1 zeigt eine Bearbeitungsvorrichtung 1, die als ein Bündigfräsaggregat ausgebildet ist. Die Bearbeitungsvorrichtung dieser ersten Ausführungsform weist eine Nachbearbeitungseinrichtung 2 zum Nachbearbeiten des Werkstücks (nicht gezeigt) auf. Die Bearbeitungseinrichtung 2 dient zur spanenden Bearbeitung und ist bevorzugt ein Fräser. Im Rahmen dieser Bearbeitung entstehen üblicherweise viele kleine Späne. Es ist auch denkbar, dass es sich antelle des Bündigfräsaggregats um ein Ziehklingenaggregat mit Spänezerkleinerer handelt.

Das Fräswerkzeug 2 kann in einem ersten Nachbearbeitungsschritt verwendet werden, bei dem die Kante, nachdem sie an das Werkstück angeleimt wurde, bis zur Werkstückoberfläche bündig gefräst wird.

Durch die Öffnung 8, die benachbart zur Bearbeitungseinrichtung 2 ausgebildet ist, können die Späne eingesaugt bzw. weggeführt werden. Eine Wegführung 4 zum Wegführen zumindest eines Teils der Späne weg von Werkstück ist vorgesehen. Die Wegführung 4 führt Späne zu dem Ende E der Wegführung hin. An diesem Ende E befindet sich die Austrittsöffnung 10.

Des Weiteren zeigt Figur 1 einen Anschluss 9 zum Anschließen einer Fluidzuleitung und zum Einleiten von Fluid.

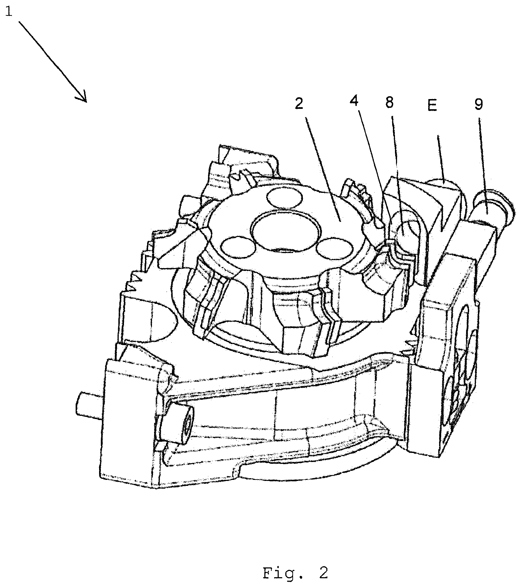

Figur 2 zeigt das Fräswerkzeug 2, die Öffnung 8, die benachbart zur als Fräswerkzeug ausgebildeten Bearbeitungseinrichtung 2 und in einem ersten Abschnitt der Wegführung 4 ausgebildet ist, sowie das Ende E der Wegführung 4 und den Anschluss 9.

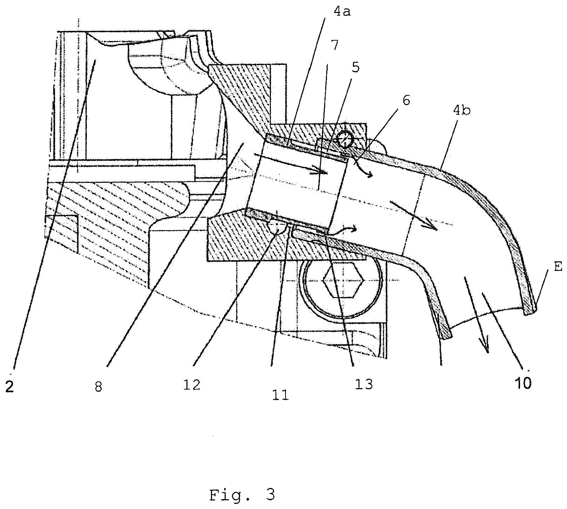

In Figur 3 ist die Bearbeitungsvorrichtung 1 in der Querschnittsansicht gezeigt. In dieser Ausführungsform weist die Wegführung 4 einen ersten 4a und einen zweiten 4b Abschnitt auf. Der zweite Abschnitt 4b liegt näher als der erste Abschnitt 4a an dem Ende E der Wegführung, zu dem hin der Span oder die Späne (nicht gezeigt) abgeführt werden.

Die Fluidzuführung 5 ist so ausgebildet, dass sie mit der Wegführung 4 in einem Verbindungsbereich 6 in Fluidverbindung steht. In dieser Ausführungsform sind die Fluidzuführung 5 und die Wegführung 4 derart ausgestaltet, dass sie im Verbindungsbereich 6 eine Ringdüse 13 ausbilden. Die Wegführung 4 und die Fluidzuführung 5 sind zumindest im Verbindungsbereich 6 zumindest abschnittsweise konzentrisch angeordnet. Die Fluidzuführung 5 ist ringförmig ausgebildet. Der zweite Abschnitt 4b umgibt den ersten Abschnitt 4a zumindest im Verbindungsbereich 6 ringförmig. Der erste 4a und der zweite 4b Abschnitt der Wegführung sind im Verbindungsbereich 6 derart angeordnet, dass sie die Fluidzuführung 5 ausbilden. Die Fluidzuführung kann aber auch anders ausgebildet sein. Beispielsweise kann Fluid nur in einem Punkt oder mehreren einzelnen Punkten in den Verbindungsbereich 6 zugeführt werden.

Die Fluidzuführung 5 und die Wegführung 4 sind derart angeordnet, dass eine Zufuhr von Fluid (angedeutet durch die Pfeile in Fig. 3, die gebogen sind) in den Verbindungsbereich 6 mittels der Fluidzuführung 5 eine Strömung weg von dem Werkstück zu einem benachbarten Bereich 7 hin induziert wird, der dem Verbindungsbereich 6 vorgelagert ist. Die Strömung wird in und/oder an der Wegführung 4 erzeugt. In dem benachbarten Bereich 7 wird also ein Unterdruck erzeugt, der dadurch ausgeglichen wird, dass Umgebungsluft von dem Werkstück in diesen benachbarten Bereich 7 nachströmt. Durch die Öffnung 8 kann Umgebungsluft, die im Wesentlichen das Werkstück umgibt, nachströmen und den Span bzw. die Späne mit sich führen.

Der Verbindungsbereich 6 ist näher als der benachbarte Bereich 7 an dem Ende E der Wegführung 4 angeordnet. Die Wegführung 4 ist zumindest im Verbindungsbereich 6 rohrförmig ausgebildet.

Die Figuren 1 und 3 zeigen, dass der zweite Abschnitt 4b der Wegführung 4 aus der Bearbeitungsvorrichtung 1 vorsteht. Der zweite Abschnitt 4b ist in der dargestellten Ausführungsform gebogen und rohrförmig ausgestaltet.

Die Wegführung 4 verläuft zumindest abschnittsweise innerhalb der Bearbeitungsvorrichtung 1. In der in Figur 3 gezeigten Ausführungsform verläuft der erste Abschnitt 4a innerhalb der Bearbeitungsvorrichtung 1. Auch die Fluidzuführung 5 ist zumindest abschnittsweise innerhalb der Bearbeitungsvorrichtung 1 ausgebildet.

Die Austrittsöffnung 10 ist verstellbar angeordnet, indem der zweite Abschnitt 4b bzw. die Wegführung 4 entsprechend ausgestaltet ist. In der gezeigten Ausführungsform sind der erste und zweite Abschnitt 4a, 4b rohrförmig ausgebildet und ineinander teilweise überlappend. In dem Überlappungsbereich sind die beiden Abschnitte 4a, 4b zueinander drehbar, sodass auch die Austrittsöffnung 10 relativ zur als Aggregat ausgebildeten Bearbeitungsvorrichtung 1 drehbar ist.

Dadurch, dass das Fluid durch die Ringdüse 13 mit der durch die gebogenen Pfeile angedeuteten Richtungen eingeführt wird, wird eine Strömung in dem zweiten Abschnitt 4b zu dem Ende E hin vorgegeben. Durch die Zufuhr von Fluid durch die Ringdüse 13 entsteht in dem benachbarten Bereich 7 ein Unterdruck, der dadurch ausgeglichen wird, dass Umgebungsluft von dem Werkstück und/oder der Bearbeitungseinrichtung 2 zu dem benachbarten Bereich 7 strömt. Dadurch wird zu dem benachbarten Bereich 7 hin die durch den Pfeil angedeutete Strömung induziert. Die insgesamte Strömungsrichtung erfolgt damit von dem Werkstück zu dem Ende E der Wegführung 4 hin.

Die Fluidhinleitung 12 stellt einen Teil der Fluidzuführung 5 dar. Über die Fluidhinleitung 12 wird Fluid in die Ringkammer 11 geleitet, die wiederum an dem Ende die Ringdüse 13 ausbildet. Die Ringkammer 11 ist, in Strömungsrichtung betrachtet, der Ringdüse 13 vorgelagert und gibt so die Richtung vor, in die die Fluidzufuhr in der Wegführung 4 erfolgt.

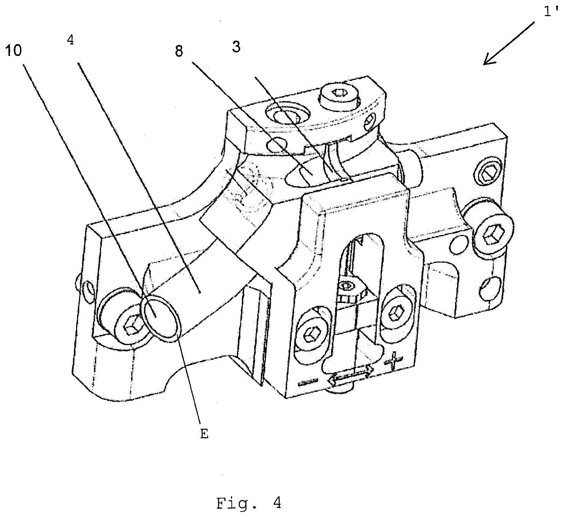

Figur 4 zeigt eine zweite Ausführungsform, in der die Bearbeitungsvorrichtung als Aggregat ausgebildet ist. Dabei handelt es sich um ein Ziehklingenaggregat 1'. Die Bearbeitungsvorrichtung ist dabei eine Nachbearbeitungseinrichtung 3 zum Nachbearbeiten des Werkstücks. Die Nachbearbeitungseinrichtung 3 ist insbesondere eine Ziehklinge, die einen Span in einem zweiten Nachbearbeitungsschritt abzieht, beispielsweise von dem Werkstück oder von einer auf dem Werkstück aufgebrachten Kante. In diesem Fall wird typischerweise ein einzelner und/oder längerer Span erzeugt. Es ist aber auch denkbar, dass ein Spänezerkleinerer (nicht gezeigt) vorgesehen ist, der einen Span in mehrere Späne unterteilt.

In Bezug auf diese Ausführungsform werden die gleichen Bezugszeichen verwendet und das für die erste Ausführungsform Gesagte gilt gleichermaßen. Figur 4 zeigt insbesondere die Austrittsöffnung 10 an dem Ende E der Wegführung 4, zu dem hin der Span abgeführt wird. Durch die Öffnung 8 tritt Umgebungsluft, die den Span (nicht gezeigt) mit sich führt, in die Wegführung 4 ein.

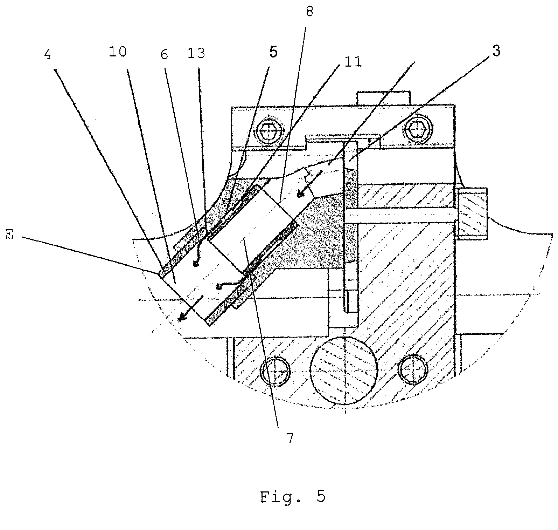

Figur 5 zeigt die Ziehklinge 3, die vor der Öffnung 8 der Wegführung 4 angeordnet ist. Auch die Wegführung dieser Ausführungsform weist einen ersten Abschnitt 4a und einen zweiten Abschnitt 4b auf. Eine Ringkammer 11 ist ausgebildet, die zu der Ringdüse 13 hinführt. Durch die Ringdüse 13 wird Fluid eingebracht, so wie dies durch die gebogenen Pfeile in Figur 5 angedeutet ist. Ein Unterdruck entsteht durch das zugeführte Fluid in dem vorgelagerten Bereich 7. Dieser Unterdruck wird dadurch ausgeglichen, dass Umgebungsluft, wie durch den rechten Pfeil in Figur 5 angedeutet, von dem Werkstück in den Bereich 7 nachströmt. Dadurch wird der Span zusammen mit dieser nachgezogenen Umgebungsluft leicht und zuverlässig vom Werkstück und/oder der Bearbeitungseinrichtung weggeführt.

## Patentansprüche

1. Bündigfräsaggregat (1) oder Ziehklingenaggregat (1'), zum Bearbeiten von plattenförmigen Werkstücken, die zumindest teilweise aus Holz, Holzwerkstoffen, Kunststoff oder dergleichen bestehen, und zum Wegführen von zumindest einem Teil eines Spans oder von Spänen, mit
einer Bearbeitungseinrichtung zum Bearbeiten des Werkstücks, bevorzugt einer Nachbearbeitungseinrichtung (2, 3) zum Nachbearbeiten des Werkstücks, unter Abgabe des Spans oder von Spänen,
einer Wegführung (4) zum Wegführen von zumindest eines Teils des Spans oder der Späne,
einer Fluidzuführung (5) zum Zuführen von Fluid, bevorzugt Druckluft,
wobei die Fluidzuführung (5) mit der Wegführung (4) in einem Verbindungsbereich (6) in Fluidverbindung steht, wobei die Fluidzuführung (5) und die Wegführung (4) derart ausgebildet sind, dass eine Zufuhr von Fluid in den Verbindungsbereich (6) mittels der Fluidzuführung (5) einen Unterdruck in einem dem Verbindungsbereich (6) benachbarten Bereich (7) erzeugt, der nahe dem Werkstück und/oder der Bearbeitungseinrichtung liegt, sodass eine Strömung von dem Werkstück und/oder der Bearbeitungseinrichtung zu dem benachbarten Bereich hin entsteht, die zumindest einen Teil des Spans oder der Späne transportiert, wobei die Fluidzuführung (5) und die Wegführung (4) derart ausgestaltet sind, dass sie im Verbindungsbereich (6) eine Ringdüse (13) ausbilden.

2. Bündigfräsaggregat (1) oder Ziehklingenaggregat (1') nach Anspruch 1, bei dem der Verbindungsbereich (6) näher als der benachbarte Bereich (7) an dem Ende (E) der Wegführung (4) liegt, zu dem hin der Span oder die Späne abgeführt wird/werden.

3. Bündigfräsaggregat (1) oder Ziehklingenaggregat (1') nach Anspruch 1 oder 2, bei dem die Wegführung (4) zumindest im Verbindungsbereich (6) rohrförmig ausgebildet ist.

4. Bündigfräsaggregat (1) oder Ziehklingenaggregat (1') nach einem der vorhergehenden Ansprüche, bei dem die Wegführung (4) und die Fluidzuführung (5) zumindest im Verbindungsbereich (6) zumindest abschnittsweise konzentrisch angeordnet sind und/oder die Fluidzuführung (5) ringförmig ausgebildet ist oder die Fluidzuführung (5) derart ausgebildet ist, dass Fluid im Wesentlichen punktförmig in den Verbindungsbereich (6) zugeführt wird.

5. Bündigfräsaggregat (1) oder Ziehklingenaggregat (1') nach einem der vorhergehenden Ansprüche, bei dem die Wegführung (4) einen ersten Abschnitt (4a) und einen zweiten Abschnitt (4b) aufweist, der näher als der erste Abschnitt (4a) an dem Ende (E) der Wegführung liegt, zu dem hin der Span oder die Späne abgeführt wird/werden, und wobei bevorzugt der zweite Abschnitt (4b) den ersten Abschnitt (4a) zumindest im Verbindungsbereich (6) ringförmig umgibt.

6. Bündigfräsaggregat (1) oder Ziehklingenaggregat (1') nach Anspruch 5, bei dem der erste (4a) und der zweite (4b) Abschnitt der Wegführung im Verbindungsbereich (6) derart angeordnet sind, dass sie die Fluidzuführung (5) ausbilden.

7. Bündigfräsaggregat (1) oder Ziehklingenaggregat (1') nach Anspruch 5 oder 6, bei dem der zweite Abschnitt (4b) der Wegführung zumindest abschnittsweise aus dem Bündigfräsaggregat (1) oder dem Ziehklingenaggregat (1') vorsteht.

8. Bündigfräsaggregat (1) oder Ziehklingenaggregat (1') nach einem der vorhergehenden Ansprüche, wobei das Bündigfräsaggregat (1) oder Ziehklingenaggregat (1') derart ausgestaltet ist, dass die Wegführung (4) zumindest abschnittsweise innerhalb des Bündigfräsaggregats (1) oder des Ziehklingenaggregats (1') verläuft, und/oder zumindest der erste Abschnitt (4a) innerhalb des Bündigfräsaggregats (1) oder des Ziehklingenaggregats (1') verläuft.

9. Bündigfräsaggregat (1) oder Ziehklingenaggregat (1') nach Anspruch 8, bei dem der erste Abschnitt (4a) eine Öffnung (8) ausbildet, die benachbart zur Bearbeitungseinrichtung (2, 3) und/oder dem Werkstück ausgebildet ist.

10. Bündigfräsaggregat (1) oder Ziehklingenaggregat (1') nach einem der vorhergehenden Ansprüche, das einen Anschluss (9) zum Anschließen einer Fluidzuleitung und zum Einleiten von Fluid in die Fluidzuführung (5) aufweist.

11. Bündigfräsaggregat (1) oder Ziehklingenaggregat (1') nach einem der vorhergehenden Ansprüche, bei dem die Fluidzuführung (5) zumindest abschnittsweise innerhalb des Bündigfräsaggregats (1) oder des Ziehklingenaggregats (1') ausgebildet ist.

12. Verfahren zum Wegführen von zumindest einem Teil eines Spans oder von Spänen durch das Bündigfräsaggregat (1) oder Ziehklingenaggregat (1') nach einem der vorhergehenden Ansprüche weg von einem Werkstück und/oder dem Bündigfräsaggregat (1) oder Ziehklingenaggregat (1'), wobei das Werkstück bearbeitet, bevorzugt nachbearbeitet, wird und dabei der Span oder die Späne entstehen,
**dadurch gekennzeichnet, dass** Fluid derart zugeführt wird, dass ein Unterdruck nahe dem Werkstück und/oder der Bearbeitungseinrichtung entsteht und durch diesen eine Strömung erzeugt wird, die den Span bzw. die Späne weg von dem Werkstück und/oder der Bearbeitungseinrichtung transportiert.

## Claims

1. Flush milling unit (1) or scraper unit (1') for machining panel-formed workpieces which consist at least partially of wood, wood materials, plastic or the like, and for removing at least a part of a chip or chips, having
a machining device for machining the workpiece, preferably a post-machining device (2, 3) for post-machining the workpiece, producing the chip or chips, a discharge passage (4) for removing at least a part of the chip or chips,
a fluid feed (5) for feeding fluid, preferably compressed air,
wherein the fluid feed (5) is, in a connection region (6), in fluid connection with the discharge passage (4), wherein the fluid feed (5) and the discharge passage (4) are configured in such a manner that feeding fluid into the connection region (6) by means of the fluid feed (5) creates a negative pressure in a region (7) adjacent to the connection region (6) which is located near the workpiece and/or the machining device, so that a flow from the workpiece and/or the machining device towards the adjacent region results which transports at least a part of the chip or chips, wherein the fluid feed (5) and the discharge passage (4) are configured in such a manner that they form a ring nozzle (13) in the connection region (6).

2. Flush milling unit (1) or scraper unit (1') according to claim 1, wherein the connection region (6) is located closer to the end (E) of the discharge passage (4) towards which the chip or chips is/are transported away than the adjacent region (7).

3. Flush milling unit (1) or scraper unit (1') according to claim 1 or 2, wherein the discharge passage (4) is, at least in the connection region (6), tubular in form.

4. Flush milling unit (1) or scraper unit (1') according to one of the preceding claims, wherein the discharge passage (4) and the fluid feed (5) are, at least in the connection region (6), at least in sections, arranged concentrically and/or the fluid feed (5) is annular in form or the fluid feed (5) is designed in such a manner that fluid is substantially fed into the connection region (6) in a punctiform manner.

5. Flush milling unit (1) or scraper unit (1') according to one of the preceding claims, wherein the discharge passage (4) comprises a first section (4a) and a second section (4b) which is located closer to the end (E) of the discharge passage towards which the chip or chips is/are transported away than the first section (4a), and wherein the second section (4b) preferably surrounds the first section (4a) in an annular manner, at least in the connection region (6).

6. Flush milling unit (1) or scraper unit (1') according to claim 5, wherein the first (4a) and the second (4b) section of the discharge passage are arranged in the connection region (6) in such a manner that they form the fluid feed (5).

7. Flush milling unit (1) or scraper unit (1') according to claim 5 or 6, wherein the second section (4b) of the discharge passage projects at least partially from the flush milling unit (1) or the scraper unit (1').

8. Flush milling unit (1) or scraper unit (1') according to one of the preceding claims, wherein the flush milling unit (1) or scraper unit (1') is configured such that the discharge passage (4) runs at least partially within the flush milling unit (1) or the scraper unit (1'), and/or at least the first section (4a) runs within the flush milling unit (1) or the scraper unit (1').

9. Flush milling unit (1) or scraper unit (1') according to claim 8, wherein the first section (4a) forms an opening (8) which is formed adjacent to the machining device (2, 3) and/or the workpiece.

10. Flush milling unit (1) or scraper unit (1') according to one of the preceding claims which has a connection (9) for connecting a fluid supply and for introducing fluid into the fluid feed (5).

11. Flush milling unit (1) or scraper unit (1') according to one of the preceding claims, wherein the fluid feed (5) is formed at least partially within the flush milling unit (1) or the scraper unit (1').

12. A method for removing at least a part of a chip or chips produced by the flush milling unit (1) or scraper unit (1') according to one of the preceding claims away from a workpiece and/or the flush milling unit (1) or scraper unit (1'), wherein the workpiece is machined, preferably post-machined, and the chip or chips are thereby produced,
**characterised in that** fluid is fed in such a manner that a negative pressure is generated near the workpiece and/or the machining device and as a result a flow is created which transports the chip or the chips away from the workpiece and/or the machining device.

## Revendications

1. Groupe d'affleurage (1) ou groupe de raclage (1'), pour usiner des pièces en forme de plaque qui consistent au moins partiellement en du bois, des matériaux en bois, de la matière plastique ou similaire, et pour évacuer au moins une partie d'un copeau ou de copeaux, avec
un appareil d'usinage pour usiner la pièce, de préférence un appareil de réusinage (2, 3) pour réusiner la pièce, en enlevant le copeau ou les copeaux,
une évacuation (4) pour évacuer au moins une partie du copeau ou des copeaux, une amenée de fluide (5) pour amener du fluide, de préférence de l'air comprimé, dans lequel l'amenée de fluide (5) est en communication de fluide avec l'évacuation (4) dans une zone de liaison (6),
dans lequel l'amenée de fluide (5) et l'évacuation (4) sont réalisées de sorte qu'une amenée de fluide dans la zone de liaison (6) au moyen de l'amenée de fluide (5) génère une pression négative dans une zone (7) voisine de la zone de liaison (6) qui est proche de la pièce et/ou de l'appareil d'usinage, de sorte qu'il se forme un courant de la pièce et/ou de l'appareil d'usinage vers la zone voisine, qui transporte au moins une partie du copeau ou des copeaux, dans lequel l'amenée de fluide (5) et l'évacuation (4) sont configurées de sorte qu'elles réalisent une buse annulaire (13) dans la zone de liaison (6).

2. Groupe d'affleurage (1) ou groupe de raclage (1') selon la revendication 1, dans lequel la zone de liaison (6) est plus proche que la zone voisine (7) au niveau de l'extrémité (E) de l'évacuation (4), vers laquelle le copeau ou les copeaux est/sont évacué(s).

3. Groupe d'affleurage (1) ou groupe de raclage (1') selon la revendication 1 ou 2, dans lequel l'évacuation (4) est réalisée de façon tubulaire au moins dans la zone de liaison (6).

4. Groupe d'affleurage (1) ou groupe de raclage (1') selon l'une quelconque des revendications précédentes, dans lequel l'évacuation (4) et l'amenée de fluide (5) sont disposées de façon concentrique au moins par endroit au moins dans la zone de liaison (6) et/ou l'amenée de fluide (5) est réalisée de façon annulaire ou l'amenée de fluide (5) est réalisée de sorte que du fluide est amené sensiblement ponctuellement dans la zone de liaison (6).

5. Groupe d'affleurage (1) ou groupe de raclage (1') selon l'une quelconque des revendications précédentes, dans lequel l'évacuation (4) présente un premier segment (4a) et un second segment (4b) qui est plus proche que le premier segment (4a) de l'extrémité (E) de l'évacuation vers lequel le copeau ou les copeaux est/sont évacué(s), et dans lequel de préférence le second segment (4b) entoure de façon annulaire le premier segment (4a) au moins dans la zone de liaison (6).

6. Groupe d'affleurage (1) ou groupe de raclage (1') selon la revendication 5, dans lequel le premier (4a) et le second (4b) segment de l'évacuation dans la zone de liaison (6) sont disposés de sorte qu'ils réalisent l'amenée de fluide (5).

7. Groupe d'affleurage (1) ou groupe de raclage (1') selon la revendication 5 ou 6, dans lequel le second segment (4b) de l'évacuation dépasse au moins par endroit du groupe d'affleurage (1) ou du groupe de raclage (1').

8. Groupe d'affleurage (1) ou groupe de raclage (1') selon l'une quelconque des revendications précédentes, dans lequel le groupe d'affleurage (1) ou le groupe de raclage (1') sont configurés de sorte que l'évacuation (4) s'étend au moins par endroit à l'intérieur du groupe d'affleurage (1) ou du groupe de raclage (1'), et/ou au moins le premier segment (4a) s'étend à l'intérieur du groupe d'affleurage (1) ou du groupe de raclage (1').

9. Groupe d'affleurage (1) ou groupe de raclage (1') selon la revendication 8, dans lequel le premier segment (4a) réalise une ouverture (8) qui est réalisée de manière voisine par rapport à l'appareil d'usinage (2, 3) et/ou à la pièce.

10. Groupe d'affleurage (1) ou groupe de raclage (1') selon l'une quelconque des revendications précédentes, qui présente un raccord (9) pour raccorder une conduite d'amenée de fluide et pour introduire du fluide dans l'amenée de fluide (5).

11. Groupe d'affleurage (1) ou groupe de raclage (1') selon l'une quelconque des revendications précédentes, dans lequel l'amenée de fluide (5) est réalisée au moins par endroit à l'intérieur du groupe d'affleurage (1) ou du groupe de raclage (1').

12. Procédé pour évacuer au moins une partie d'un copeau ou de copeaux par le groupe d'affleurage (1) ou groupe de raclage (1') selon l'une quelconque des revendications précédentes d'une pièce et/ou du groupe d'affleurage (1) ou groupe de raclage (1') dans lequel la pièce est usinée, de préférence réusinée, et le copeau ou les copeaux se forment alors,
**caractérisé en ce que** le fluide est acheminé de sorte qu'une pression négative se forme à proximité de la pièce et/ou de l'appareil d'usinage et de ce fait, un courant qui transporte le copeau ou les copeaux à distance de la pièce et/ou de l'appareil d'usinage est généré.
